Europäisches Patentamt

**European Patent Office**

Office européen des brevets

(11) Veröffentlichungsnummer: **0 311 552**
**A2**

## (12) EUROPÄISCHE PATENTANMELDUNG

(21) Anmeldenummer: **88730050.7**

(22) Anmeldetag: **02.03.88**

(51) Int. Cl.⁴: **G 09 F 27/00**
**H 04 N 9/12**

(30) Priorität: **06.10.87 DE 8713533**

(43) Veröffentlichungstag der Anmeldung:
**12.04.89 Patentblatt 89/15**

(84) Benannte Vertragsstaaten:
**AT CH DE FR GB IT LI NL**

(71) Anmelder: **EKB ENTWICKLUNGSGESELLSCHAFT FÜR
KOMMUNIKATIONSTECHNIK mbH BERLIN
Wilmersdorfer Strasse 39
D-1000 Berlin 12 (DE)**

(72) Erfinder: **Skiba, Ralf
Hohenheimer Strasse 5
D-1000 Berlin 28 (DE)**

**Schreiber, Thomas
Forstweg 27A
D-1000 Berlin 28 (DE)**

(74) Vertreter: **Pfenning, Meinig & Partner
Kurfürstendamm 170
D-1000 Berlin 15 (DE)**

(54) **Anzeigevorrichtung.**

㉗ Es wird eine Anzeigevorrichtung mit mindestens einer tafelförmigen Anzeigefläche vorgeschlagen, die eine Mehrzahl matrixförmig unmittelbar über- und nebeneinander angeordneter, in einem Rahmen gehaltener Wiedergabegeräte für fernsehnormgerechte RGB-Signale aufweist. Die Anzeigevorrichtung ist als stehende Säule ausgebildet und ihre die Anzeigefläche(n) einschließende Umfangsfläche umfaßt mehrere senkrechte, winkelig zueinander angeordnete Ebenen.

FIG. 1

**Beschreibung**

## Anzeigevorrichtung

Die Neuerung betrifft eine Anzeigevorrichtung gemäß dem Oberbegriff des Anspruchs 1.

Für besondere Demonstrationszwecke ist es bekannt, in einer Wand eine Vielzahl von Wiedergabegeräten für fernsehnormgerechte RGB-Signale matrix-förmig in der Weise anzuordnen, daß die einzelnen Wiedergabegeräte entweder jeweils selbständige Einzelbilder oder nur einen Teil eines auf der gesamten Wand dargestellten Großbildes wiedergeben.

Stationäre Vorrichtungen zur Kundgebung von amtlichen Bekanntmachungen und dergleichen die Allgemeinheit interessierenden Informationen sowie auch für Werbezwecke sind normalerweise so ausgebildet, daß sie die lösbare oder auch dauerhafte Befestigung von Plakaten oder Zetteln ermöglichen. Derartige Vorrichtungen haben zumeist die Form von Tafeln oder Säulen; ein Beispiel hierfür sind die zylindrischen Litfaßsäulen.

Diese Vorrichtungen entsprechen jedoch häufig nicht den an sie gestellten Anforderungen, da sie nicht die Möglichkeit bieten, die Informationen häufig und schnell ändern zu können, und insbesondere auch keine bewegten Bilder wiedergeben können. Daher werden sie für Werbezwecke kaum genutzt, obwohl sie an Orten aufgestellt werden können, die ein hohes Passantenaufkommen haben, beispielsweise in Bahnhöfen, Flughäfen und anderen Verkehrsknotenpunkten, in Kaufhäusern, sowie auch bei Kongressen, Ausstellungen und ähnlichen Veranstaltungen.

Es ist daher die Aufgabe der vorliegenden Neuerung, eine Anzeigevorrichtung mit mindestens einer tafelförmigen Anzeigefläche, die eine Mehrzahl matrixförmig unmittelbar über- und nebeneinander angeordneter, in einem Rahmen gehaltener Wiedergabegeräte für fernsehnormgerechte RGB-Signale aufweist, zu schaffen, die zur Bekanntgabe von Informationen sowie für Werbezwecke und dergleichen einsetzbar ist und an allen hierfür geeigneten Plätzen ohne großen Aufwand installiert werden kann.

Diese Aufgabe wird neuerungsgemäß durch die im kennzeichnenden Teil des Anspruchs 1 angegebenen Merkmale gelöst. Vorteilhafte Weiterbildungen der neuerungsgemäßen Anzeigevorrichtung ergeben sich aus den Unteransprüchen.

Dadurch, daß die Anzeigevorrichtung als stehende Säule ausgebildet ist und ihre die Anzeigefläche(n) einschließende Umfangsfläche mehrere senkrechte, winkelig zueinander angeordnete Ebenen umfaßt, kann sie überall ohne besondere bauliche Vorbereitungen aufgestellt werden und ihre Anzeigeflächen können so angeordnet sein, daß aus jeder Richtung zumindest eine dieser Flächen wahrgenommen werden kann. Neben der Wiedergabe aktueller Sachinformationen können alle Möglichkeiten der modernen Werbung genutzt werden, gegebenenfalls mit einer zusätzlichen akustischen Ausstrahlung.

Die Neuerung wird im folgenden anhand eines in den Figuren dargestellten Ausführungsbeispiels näher erläutert. Es zeigen:

Fig. 1 eine dreieckförmige Anzeigevorrichtung in der Draufsicht, und

Fig. 2 bis 4 jeweils eine Seitenansicht der Vorrichtung nach Fig. 1.

Die dargestellte Anzeigevorrichtung weist drei Einheiten 1, 2 und 3 aus Wiedergabegeräten für fernsehnormgerechte RGB-Signale auf, die in der Draufsicht in Form eines gleichseitigen Dreiecks zueinander angeordnet sind. Jede dieser Einheiten enthält eine Mehrzahl von matrixförmig unmittelbar über- und nebeneinander angeordneten Wiedergabegeräten 4; im gezeigten Ausführungsbeispiel ist dies eine 4x4-Matrix, es kann jedoch beliebig jede zweckmäßige Anzahl von Wiedergabegeräten sowohl in der horizontalen als auch in der vertikalen Richtung gewählt werden. Die einzelnen Wiedergabegeräte 4 sind in einem gitterförmigen Rahmen 5 aus Metall, vorzugsweise Aluminium oder Stahl, gehalten. Das Rahmengitter ist so ausgebildet, daß die Abstände zwischen benachbarten Wiedergabegeräten so gering sind, daß bei einer sich über mehrere dieser Geräte erstreckenden Darstellung ein geschlossener Bildeindruck entsteht. Anstelle eines gitterförmigen Rahmens kann auch ein alle Wiedergabegeräte einer Einheit umfassender Rahmen vorgesehen sein und die Wiedergabegeräte sind über ihre Gehäuse unmittelbar miteinander verbunden. Es soll in jedem Fall bei jeder Einheit aus den Wiedergabegeräten der Eindruck einer in einer senkrechten Ebene liegenden Anzeigetafel vermittelt werden, auf der gleichzeitig verschiedene Einzelbilder oder ein einheitliches Gesamtbild dargestellt werden können.

Die einzelnen Einheiten 1, 2 oder 3 ruhen jeweils auf einem Sockel 6, 7 oder 8 entsprechender Breite. Um einen geschlossenen optischen Eindruck zu bewahren, liegen die Außenflächen einer Einheit und des zugeordneten Sockels in einer Ebene. Dieser Eindruck kann noch dadurch verstärkt werden, daß die Außenfläche jeder Einheit von einer durchgehenden, alle Wiedergabegeräte abdeckenden lichtdurchlässigen Scheibe gebildet wird.

Die Sockel 6, 7 und 8 können entsprechend ihrer Zweckbestimmung unterschiedlich gestaltet sein.

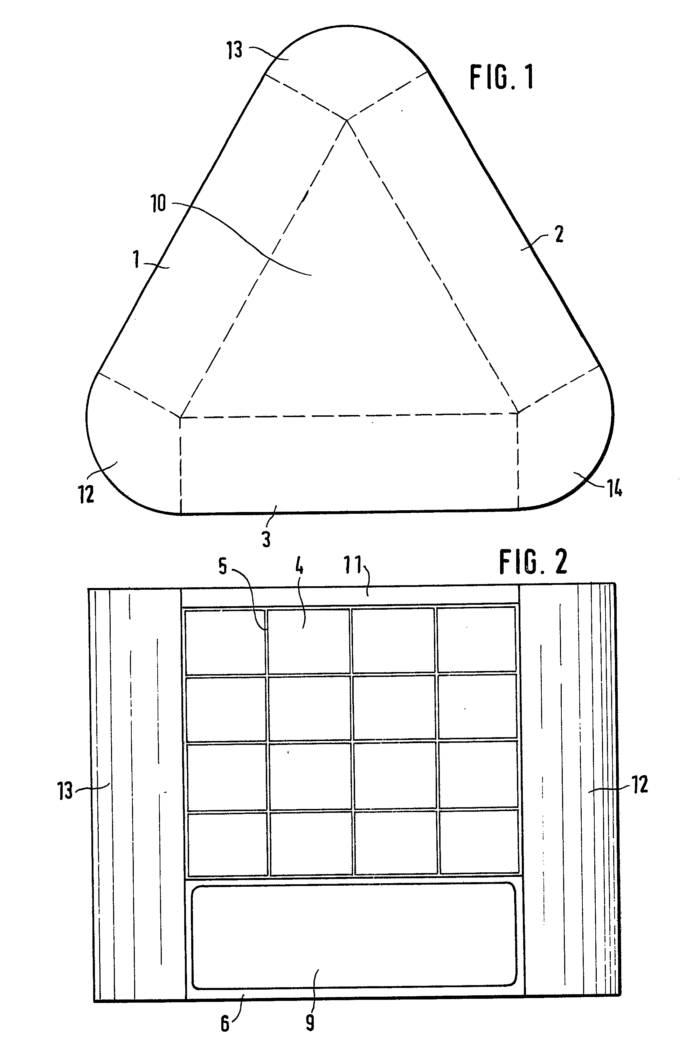

Der Sockel 6 in Fig. 2 kann eine Durchgangsöffnung 9 enthalten, durch die eine Person in den durch die Einheiten 1, 2 und 3 gebildeten freien Innenraum gelangen kann, um dort Reparatur-oder Wartungsarbeiten oder dergleichen vorzunehmen. Der Innenraum nimmt auch die elektrischen Leitungen, Anschlußeinrichtungen und ähnliches auf. Die gesamte Anzeigevorrichtung einschließlich des Innenraums besitzt eine durchgehende obere Abdeckung 10 aus einem geeigneten Material, die jedoch vorzugsweise lichtdurchlässig ist und mit einer Entlüftungsvorrichtung versehen ist. Der Rand dieser Abdeckung 10 ist mit einer Blende 11 verkleidet.

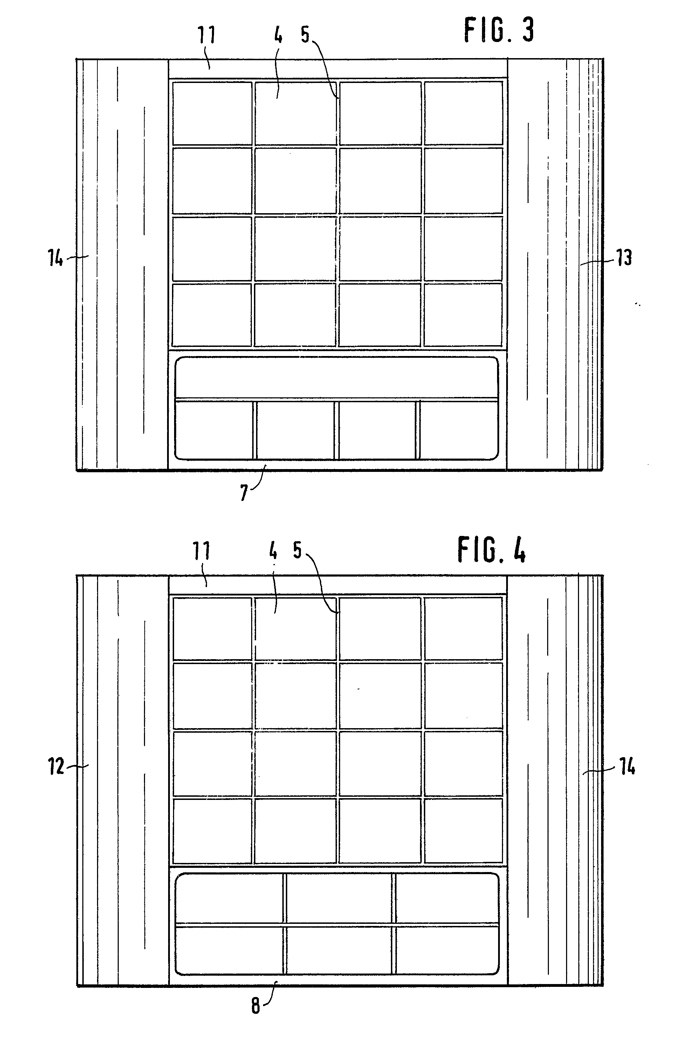

Die Sockel 7 und 8 dienen der Aufnahme von für den Betrieb der Anzeigevorrichtung benötigten Geräten, beispielsweise verschiedenen Video-und Steuergeräten. Die Größe der Aufnahmefächer ist den Abmessungen der verschiedenen Geräte angepaßt, so daß die einzelnen Sockel unterschiedlich ausgebildet sein können, wie die Sockel 7 und 8 in den Fig. 3 und 4 zeigen.

Auch die Sockel 6, 7 und 8 sind auf der Außenseite mit jeweils einer abnehmbaren oder aufklappbaren Abdeckung versehen, die mit der die Wiedergabegeräte abdeckenden Scheibe in einer Ebene liegt, jedoch undurchsichtig ist.

Der Übergang zwischen jeweils zwei Bildschirmeinheiten ist durch eine Blende 12, 13 oder 14 verkleidet, so daß die Anzeigevorrichtung in Umfangsrichtung keinerlei scharfkantige Übergänge aufweist. Die Blenden 11 und die Blenden 12, 13 und 14 bestehen vorzugsweise aus dem gleichen Material.

Der Umriß der Anzeigevorrichtung braucht nicht dreieckig zu sein, sondern diese kann eine gewünschte Anzahl von tafelförmigen Wiedergabegeräteeinheiten aufweisen, die in einer beliebigen geschlossenen räumlichen Zuordnung zueinander angeordnet sind, zum Beispiel in Form eines Vierecks.

Es ist wünschenswert, daß jede ebene Fläche der Anzeigevorrichtung eine matrixförmige Einheit aus Wiedergabegeräten enthält; dies ist jedoch nicht erforderlich.

**Patentansprüche**

1. Anzeigevorrichtung mit mindestens einer tafelförmigen Anzeigefläche, die eine Mehrzahl matrixförmig unmittelbar über- und neben-einander angeordneter, in einem Rahmen gehaltener Wiedergabegeräte für fernsehnormgerechte RGB-Signale aufweist, **dadurch gekennzeichnet,** daß die Anzeigevorrichtung als stehende Säule ausgebildet ist und ihre die Anzeigefläche(n) einschließende Umfangsfläche mehrere senkrechte, winkelig zueinander angeordnete Ebenen umfaßt.

2. Anzeigevorrichtung nach Anspruch 1, dadurch gekennzeichnet, daß die senkrechten Ebenen in einem Dreieck angeordnet sind.

3. Anzeigevorrichtung nach Anspruch 1, dadurch gekennzeichnet, daß die senkrechten Ebenen in einem Viereck angeordnet sind.

4. Anzeigevorrichtung nach einem der Ansprüche 1 bis 3, dadurch gekennzeichnet, daß jede der senkrechten Ebenen eine tafelförmige Anzeigefläche enthält.

5. Anzeigevorrichtung nach einem der Ansprüche 1 bis 4, dadurch gekennzeichnet, daß der Rahmen (5) jeweils einer Anzeigefläche auf einem Sockel (6,7,8) ruht, dessen Außenfläche in einer Ebene mit der Anzeigefläche liegt.

6. Anzeigevorrichtung nach einem der Ansprüche 1 bis 5, dadurch gekennzeichnet, daß die Übergänge zwischen den einzelnen Anzeigeflächen durch Blenden (12,13,14) verkleidet sind.

7. Anzeigevorrichtung nach einem der Ansprüche 1 bis 6, dadurch gekennzeichnet, daß in ihrem Inneren ein freier Raum gebildet ist.

8. Anzeigevorrichtung nach Anspruch 7, dadurch gekennzeichnet, daß mindestens einer der Sockel (6) einen Durchgang (9) zum Inneren der Anzeigevorrichtung aufweist.

9. Anzeigevorrichtung nach Anspruch 7 oder 8, dadurch gekennzeichnet, daß mindestens einer der Sockel (7,8) zur Aufnahme von für den Betrieb der Anzeigevorrichtung erforderlichen Geräten ausgebildet ist.

10. Anzeigevorrichtung nach einem der Ansprüche 1 bis 9, dadurch gekennzeichnet, daß jede Anzeigefläche durch eine durchgehende lichtdurchlässige Scheibe abgedeckt ist.

11. Anzeigevorrichtung nach einem der Ansprüche 1 bis 10, dadurch gekennzeichnet, daß sie eine durchgehende obere Abdeckung (10) besitzt.

12. Anzeigevorrichtung nach Anspruch 11, dadurch gekennzeichnet, daß die obere Abdeckkung (10) lichtdurchlässig ist.

13. Anzeigevorrichtung nach Anspruch 11 oder 12, dadurch gekennzeichnet, daß die obere Abdeckung (10) eine Enlüftungsvorrichtung besitzt.

14. Anzeigevorrichtung nach einem der Ansprüche 1 bis 13, dadurch gekennzeichnet, daß der Rahmen (5) gitterförmig ausgebildet ist und die Wiedergabegeräte (4) jeweils separat im Rahmen (5) gehalten sind.

15. Anzeigevorrichtung nach einem der Ansprüche 1 bis 13, dadurch gekennzeichnet, daß die Gehäuse der Wiedergabegeräte (4) miteinander verbunden sind.

FIG. 1

13

10

1

2

12

14

3

FIG. 2

5   4   11

13

12

6   9

FIG. 3

FIG. 4